# EUROPÄISCHE PATENTSCHRIFT

(11) **EP 0 878 975 B1**
(45) Veröffentlichungstag und Bekanntmachung des Hinweises auf die Patenterteilung: **27.07.2005**
(21) Anmeldenummer: 98108531.9
(22) Anmeldetag: 08.05.1998
(51) Int. Cl.: H04Q 7/34, H04M 3/42

(54) **Verfahren zum Freischalten von verfügbaren Leistungsmerkmalen eines Kommunikationssystems**
Method for activation of available service fatures of a communications system
Méthode d'activation de services disponibles spécifiques au sein d'un réseau de communications

(30) Priorität: 16.05.1997 DE 19720593
(43) Veröffentlichungstag der Anmeldung: 18.11.1998
(73) Patentinhaber: SIEMENS AKTIENGESELLSCHAFT, 80333 München (DE)
(72) Erfinder: Hirsch, Lucian, 81373 München (DE)

(56) Entgegenhaltungen:
- EP-A- 0 636 962
- JOHNSON J T: "SIGN ON AND BE SAFE IBM'S NETWORK SECURITY PROGRAM (NETSP)" DATA COMMUNICATIONS, Bd. 24, Nr. 1, 1. Januar 1995, Seite 122, 124 XP000480828

## Beschreibung

Die Erfindung betrifft ein Verfahren zum Freischalten von verfügbaren Leistungsmerkmalen eines Kommunikationssystems, in dem die zur Realisierung der verfügbaren Leistungsmerkmale erforderliche Betriebssoftware geladen ist.

Ein solches Kommunikationssystem kann beispielsweise eine Kommunikationsnebenstellenanlage, ein Firmenkommunikationsnetz oder ein Mobilfunksystem sein. Die freizuschaltenden Leistungsmerkmale können hierbei z.B. das Basisstationsubsystem eines Mobilfunksystems betreffen. Die der vorliegenden Erfindung zugrunde liegende Problematik trifft für alle beispielhaft genannten Kommunikationssysteme zu, wird nachstehend jedoch an Hand eines Mobilfunksystems erläutert.

Ein Mobilfunksystem ist ein hierarchisch gegliedertes System verschiedener Netzelemente, bei dem die unterste Hierarchiestufe von den Mobiltelefonen gebildet wird, die nach dem englischsprachigen Ausdruck 'Mobile Station' auch mit MS bezeichnet werden. Diese Mobiltelefone kommunizieren über eine sogenannte Um-Schnittstelle oder Funkschnittstelle mit die nächste Hierarchieebene bildenden Funkbasisstationen, die auch als Basisstation bzw. nach dem englischsprachigen Ausdruck 'Base Transceiver Station Equipment' mit BTSE bezeichnet werden.

Aufgrund der relativ geringen Funkreichweite solcher Basisstationen enthält ein Mobilfunksystem üblicher Größe eine sehr große Zahl von Basisstationen. Zur Lenkung und Kontrolle des Datenverkehrs zwischen den Basisstationen, sind diese gebietsweise zusammengefaßt. Die hierzu vorgesehenen übergeordneten Netzelemente werden mit Basisstationssteuerungseinheit oder gemäß dem englischsprachigen Ausdruck 'Base Station Controller' mit BSC bezeichnet. Die Basisstationen kommunizieren über eine sogenannte Abis-Schnittstelle mit den Basisstationssteuerungseinheiten. Einer Basisstationssteuerungseinheit kann gegebenenfalls zur Optimierung der Datenkommunikation eine Transcodier- und Ratenanpaßeinheit zugeordnet sein, die nach dem englischsprachigen Ausdruck 'Transcoder and Rate Adapter Unit' auch mit TRAU bezeichnet wird. Die Basisstationen, die Basisstationssteuerungseinheiten und die Transcodier- und Ratenanpaßeinheiten bilden ein Basisstationssubsystem des Mobilfunksystems, das nach dem englischsprachigen Ausdruck 'Base Station Subsystem' auch mit BSS bezeichnet wird. Basisstationen, Basisstationssteuerungseinheiten und Transcodier- und Ratenanpaßeinheiten sind hierbei Netzeinrichtungen des Basisstationssubsystems.

Die Basisstationssteuerungseinheiten kommunizieren über sogenannte A-Schnittstellen mit einer oder einigen wenigen Mobilvermittlungseinrichtungen, die nach dem englischsprachigen Ausdruck 'Mobile Switching Centers' auch mit MSC bezeichnet werden und über die u.a. auch der Übergang in andere Telefonnetze erfolgt. Die Mobilvermittlungseinrichtungen bilden gemeinsam mit einigen Datenbanken das Vermittlungssubsystem, das nach dem englischsprachigen Ausdruck 'Network Switching Subsystem' auch mit NSS bezeichnet wird.

Neben den bisher beschriebenen Netzelementhierarchien steht ein Betriebs- und Wartungssystem, das gemäß dem englischsprachigen Ausdruck 'Operation and Maintenance Subsystem' auch mit OMS bezeichnet wird. Das Betriebs- und Wartungssystem dient zum Konfigurieren und Überwachen aller Netzelemente. Überwachungsmaßnahmen und Konfigurierungsmaßnahmen werden hierzu meist von Betriebs- und Wartungszentren aus ferngesteuert, die gemäß dem englischsprachigen Ausdruck 'Operation and Maintenance Centers auch mit OMC bezeichnet werden und sich üblicherweise im Bereich von Mobilvermittlungseinrichtungen befinden. Ein Betriebs- und Wartungszentrum kommuniziert hierzu über eine O-Schnittstelle mit den Basisstationssteuereinheiten.

Grundsätzlich kann ein Betriebs- und Wartungszugriff auf ein Mobilfunknetz von zwei Seiten erfolgen, nämlich entweder zentral von einer Workstation eines Betriebs- und Wartungszentrums, die auch als Betriebs- und Wartungseinrichtung bzw. gemäß dem englischsprachigen Ausdruck 'Operation and Maintenance Terminal' mit OMT bezeichnet wird, oder im Bereich der Netzperipherie, mit Hilfe einer Wartungseinrichtung, die aufgrund des englischsprachigen Ausdrucks 'Local Maintenance Terminal' auch mit LMT bezeichnet wird und die an irgendwelche Netzeinrichtungen des Basisstationssubsystems, also an eine Basisstation, eine Basisstationssteuerungseinheit oder eine Transcodier- und Ratenanpaßeinheit angeschlossen werden kann. Hierbei können mehrere Wartungseinrichtungen gleichzeitig an verschiedene Netzeinrichtungen angeschlossen sein. An Netzeinrichtungen angeschlossene Wartungseinrichtungen werden hierbei in zwei unterschiedlichen Betriebsarten betrieben. Wenn eine Wartungseinrichtung unmittelbar an einer Basisstationssteuerungseinheit angeschlossen ist, arbeitet die Wartungseinrichtung im Normalmodus, in dem sie unmittelbar auf die Basisstationssteuerungseinheit einwirkt, unabhängig von der Art der von ihr zu konfigurierenden gemanagten Objekte. Ist die Wartungseinrichtung an eine Basisstation oder eine Transcodier- und Ratenanpaßeinheit angeschlossen, so wird sie im Basisstationssteuerungseinheitsfernsteuermodus betrieben und wirkt von Ferne auf die zugehörige Basisstationssteuerungseinheit ein, sofern funktionsbezogene Instanzen von gemanagten Objekten bearbeitet werden sollen. Bezüglich der funktionsbezogenen Instanzen von gemanagten Objekten befindet sich nämlich die Master-Datenbank in der Basistationssteuereinheit. Sollen hardwarebezogene Instanzen von gemanagten Objekten bearbeitet werden, die sich auf Netzeinrichtungen des Basisstationssubsystems, wie eine Basisstation oder eine TRAU beziehen, dann ist eine Wartungseinrichtung unmittelbar an diese Basisstation oder diese TRAU angeschlossen und arbeitet im Normalmodus.

Ein gemanagtes Objekt im Sinne der Konfiguration eines Mobilfunksystems ist eine logische Abstraktion einer Ressource im Mobilfunknetz. Hierbei wird unterschieden zwischen hardwarebezogenen gemanagten Objekten, die eine herstellerspezifische Realisierung einer Funktion beschreiben und zwischen funktionsbezogenen gemanagten Objekten, bei denen es sich jeweils im die Abstraktion einer herstellerunabhängigen Funktionalität handelt.

Betriebstechnische Arbeiten und Wartungsarbeiten können von mehreren, unabhängig voneinander arbeitenden Bedienern von Betriebs- und Wartungseinrichtungen des Betriebs- und Wartungszentrums und Bedienern von peripher angeschlossenen Wartungseinrichtungen gleichzeitig ausgeführt werden.

Das Basisstationssubsystem eines Mobilfunknetzes kann aus der Sicht des Herstellers als eine aus zwei Hauptkomponenten bestehende Einheit angesehen werden. Diese Hauptkomponenten sind einmal ein Basismodul, das die Grundfunktionalität des Basisstationssubsystems sicherstellt und allen Kunden, also Netzbetreibern zur Verfügung gestellt werden muß. Die zweite Hauptkomponente ist ein kundenbezogenes Modul, das abhängig von spezifischen Bedürfnissen jedes einzelnen Kunden aus mehreren optionalen Funktionen, sogenannten Leistungsmerkmalen, zusammengesetzt wird.

Solche Leistungsmerkmale können von Netzbetreibern aus einer Leistungsmerkmalliste ausgewählt werden und sind üblicherweise einzeln zu bezahlen.

Um dem Kunden eine spezifische Leistungsmerkmalzusammenstellung bereitzustellen und zu verhindern, daß nicht bezahlte Leistungsmerkmale aktiviert werden können, wird derzeit die Betriebssoftware von Basisstationssubsystemen auf der Grundlage kundenspezifischer Leistungsmerkmalslisten vor der Auslieferung an den Kunden zusammengestellt. Daher muß für jeden Kunden in der Softwarefabrik des Basisstationssubsystemherstellers eine spezifische Software erzeugt werden, was sowohl einen relativ großen Bearbeitungsaufwand als auch einen Verwaltungsaufwand beim Hersteller erfordert. Wenn ein Netzbetreiber in einem bestehenden Basisstationssubsystem zusätzliche Leistungsmerkmale nutzen möchte, muß die gesamte Betriebssoftware des Basisstationssubsystems erneut in einer Softwarefabrik erstellt werden. Da diese neue Software auch neu installiert und aktiviert werden muß, werden vorübergehend Netzressourcen belegt.

Das Dokument EP 0 636 962 A2 beschreibt ein Verfahren, mit dem sichergestellt werden soll, dass ein Nutzer eines Programms dieses nur verwenden kann, wenn er hierfür berechtigt ist. Hierbei sendet der Verkäufer dem Käufer des Programms einen Schlüssel, welcher diesem die Entschlüsselung des verschlüsselten Programms ermöglicht. Weiterhin ist aus dem Dokument EP 0 686 906 A2 ein Verfahren bekannt, mit dem sichergestellt werden soll, dass ein Programm von einem bestimmten Hersteller stammt, so dass der Nutzer des Programms z.B. vor Viren oder Fehlern des Programmcodes geschützt wird.

Trotz dieses hohen Aufwandes kann nicht sichergestellt werden, daß ein Kunde nicht die Betriebssoftware eines fremden Basisstationssubsystems, das mit einer größeren Anzahl von Leistungsmerkmalen ausgestattet ist, auch in seinem Basisstationssubsystem betreibt.

Aufgabe der vorliegenden Erfindung ist es, ein einfacheres Verfahren zum Freischalten von Leistungsmerkmalen eines Kommunikationssystems bereitzustellen.

Das erfindungsgemäße Verfahren geht hierbei davon aus, daß nicht alle von der einem Kommunikationssystembetreiber zur Verfügung gestellten Betriebssoftware bereitstellbaren Leistungsmerkmale freigeschaltet sein müssen. Ein erfindungsgemäßes Verfahren sieht hierbei vor, daß ein Freischalteprogramm mit einem Freischaltepaßwort gestartet wird, das unter Verwendung einer Geheiminformation, einer den Betreiber des Kommunikationssystems identifizierenden Identifizierungsinformation und einer alle freizuschaltenden Leistungsmerkmale kennzeichnenden Leistungsmerkmalinformation gebildet ist und vom Hersteller der Betriebssoftware bzw. des Kommunikationssystems bereitgestellt wird.

Aus einer vom Betreiber des Kommunikationssystems einzugebenden Identifizierungsinformation, der in der Betriebssoftware versteckt enthaltenen Geheiminformation und der durch die freizuschaltenden Leistungsmerkmale festgelegten, vom Hersteller bereitgestellten Leistungsmerkmalinformation wird im Kommunikationssystem ein Freischaltepaßwort ermittelt. Dieses wird mit dem vom Hersteller der Betriebssoftware bzw. des Kommunikationssystems bereitgestellten, als Referenzfreischaltepaßwort einzugebenden Freischaltepaßwort verglichen. Die Identifizierungsinformation kann beispielsweise eine anlagenspezifische Kennung sein, die zum Betrieb der Anlage erforderlich ist.

Falls das in dem Kommunikationssystem generierte Freischaltepaßwort mit dem eingegebenen Freischaltepaßwort übereinstimmt, werden die in der zur Generierung des Freischaltepaßwortes verwendeten Leistungsmerkmalinformation als freizuschaltend enthaltenen Leistungsmerkmale freigeschaltet.

Ein derartiges Freischalteverfahren ermöglicht es, ein Kommunikationssystem mit einer Standardbetriebssoftware auszuliefern, die die Voraussetzungen zum Realisieren aller zur Verfügung stellbarer Leistungsmerkmale enthält.

Der Kommunikationssystemhersteller kann einem Kunden ein Paßwort zur Verfügung stellen, das die von diesem Kunden gewünschten Leistungsmerkmale freischaltet. Da dieses Paßwort unter Verwendung der den Betreiber eines Kommunikationssystems, also den Kunden identifizierenden Identifizierungsinformation und einer alle freizuschaltenden Leistungsmerkmale kennzeichnenden Leistungsmerkmalinformation gebildet ist, ist jedes Paßwort kundenspezifisch. Die Benutzung eines Paßwortes von einem zweiten Kunden zur Aktivierung nicht gekaufter optionaler Leistungsmerkmale ist somit ausgeschlossen. Eine solche Identifizierungsinformation kann beispielsweise, falls es sich bei dem Kommunikationssystem um ein Mobilfunksystem gemäß dem Standard GSM handelt, unter Verwendung des sogenannen 'Mobile Country Code' MCC und des sogenannten 'Mobile Network Code' MNC gebildet sein. Da diese Codes in einem Kommunikationsnetz immer eindeutig vorliegen müssen, ist eine Manipulation der Identifizierungsinformation innerhalb eines Kommunikationssystems ausgeschlossen.

Da darüber hinaus die zum Festlegen des Freischaltepaßwortes verwendete Geheiminformation einem Unbefugten nicht zugänglich ist, sondern nur für den bestimmungsgemäßen Gebrauch versteckt in der Betriebssoftware zur Verfügung steht, ist auch das Ermitteln eines Freischaltepaßwortes außerhalb des Kommunikationssystems duch den Systembetreiber nicht möglich. Eine solche Geheiminformation kann beispielsweise auch in mehrere Teile aufgespaltet innerhalb der Betriebssoftware enthalten sein. Sie benötigt keinen großen Speicherplatz, eine Länge von acht Oktetten bzw. 64 Bit kann beispielsweise genügen.

Eine Freischalteprozedur erfolgt jeweils immer nur unter Verwendung eines Freischaltepaßwortes und ist daher nicht manipulierbar.

Da die Geheiminformation nur dem Softwarehersteller bekannt ist, dem Kunden aber unbekannt, kann ein nicht Berechtigter selbst wenn er die Vorschrift zum Erstellen eines Freischaltepaßwortes kennt, kein gültiges, von der Betriebssoftware akzeptiertes Freischaltepaßwortes kreieren.

In einer besonders günstigen Ausgestaltungsform der Erfindung werden die vom Betreiber des Kommunikationssystems eingegebene Identifizierungsinformation, die durch die freizuschaltenden Leistungsmerkmale festgelegte Leistungsmerkmalinformation und das vom Hersteller zur Verfügung gestellte Freischaltepaßwort von einer Einrichtung, an der das Freischalteprogramm gestartet worden ist, zu allen vom Ändern des Leistungsmerkmalstatus betroffenen Netzelementen übermittelt. In jedem Netzelement wird mit Hilfe dieser Informationen und der Geheiminformation ein Freischaltepaßwort ermittelt und mit dem übermittelten Freischaltepaßwort verglichen.

In einer Weiterbildung dieser Variante eines erfindungsgemäßen Verfahrens wird vor dem Bilden eines Freischaltepaßwortes in jedem Netzelement die eingegebene und übermittelte Identifizierungsinformation mit der bei der Erstinstallation eingegebenen Identifizierungsinformation verglichen und nur bei Übereinstimmung wird das Verfahren in dem Netzelement fortgeführt.

Eine andere Weiterbildung dieser Variante eines erfindungsgemäßen Verfahrens sieht vor, bei Übereinstimmung des ermittelten und des übermittelten Freischaltepaßwortes die freizuschaltenden Leistungsmerkmale freizuschalten und die Leistungsmerkmalinformation mit einer eigenen Prüfsumme im Netzelement zu speichern.

Dies ermöglicht, beim Inbetriebnehmen jedes Netzelementes die gespeicherte Prüfsumme mit einer während des Inbetriebnahmeablaufs aus der gespeicherten Leistungsmerkmalinformation ermittelten Prüfsumme zu vergleichen und nur bei Übereinstimmung eine Inbetriebnahme des Netzelementes zu ermöglichen. Zusätzlich könnte beim Inbetriebnehmen jedes Netzelementes das Freischaltepaßwort neu ermittelt werden und mit einem gespeicherten Freischaltepaßwort verglichen werden, wobei nur bei Übereinstimmung eine Inbetriebnahme des Netzelementes ermöglicht würde.

Wenn die Betriebssoftware eines Kommunikationssystems als Standardsoftware ausgeführt ist, also nicht kundenspezifisch ist, sind in der Standardversion der Betriebssoftware vorzugsweise alle vom Kunden zusätzlich zu bezahlenden Leistungsmerkmale gesperrt.

Insbesondere, wenn in einer Ausgestaltungsform der Erfindung ein Freischaltepaßwort immer alle für den Kunden freizuschaltenden, d.h., auch die bereits vorher freigeschalteten Leistungsmerkmale enthält, wird die Manipulationssicherheit noch erhöht.

In einer günstigen Ausgestaltungsform eines erfindungsgemäßen Verfahrens ist das Freischaltepaßwort durch Bilden der Hash-Funktion MD5 und Auswählen einer bestimmten Anzahl von Bit des Hash-Ergebnisses festgelegt. Für das Freischalteprogramm wird sowohl das derart ermittelte Freischaltepaßwort eingegeben, als auch die Leistungsmerkmalinformation in unverschlüsselter Form. Die Hash-Funktion liefert ein eindeutig von den Grundgrößen Identifizierungsinformation, Geheiminformation und Leistungsmerkmalinformation abhängiges Ergebnis.

Eine Ausgestaltungsform eines Verfahrens zum Freischalten von verfügbaren Leistungsmerkmalen des Basisstationssubsystems eines Mobilfunknetzes basiert darauf, daß das Freischaltepaßwort an alle Netzelemente, also an alle Basisstationen, an alle Transcodier- und Ratenanpaßeinheiten und an alle Basisstationssteuereinheiten weitergeleitet wird, und daß in jedem dieser Netzelemente ein Freischalteprogramm gestartet wird.

Dadurch wird erreicht, daß nur das Freischaltepaßwort, die Leistungsmerkmalinformation und eventuell noch die eingegebene Identifizierungsinformation, also nur sehr geringe Datenmengen innerhalb des Mobilfunksystems übertragen werden müssen. Trotzdem ist ein gesichertes Anpassen aller Netzelemente möglich. Das Freischalteprogramm kann in den einzelnen Netzelementen im Hintergrund ablaufen, so daß der normale Netzbetrieb aufrechterhalten werden kann.

Um eine unnötige Belastung der Steuereinheiten mancher Netzelemente zu minimieren, ist in einer Weiterbildung dieser Ausgestaltungsform der Erfindung vorgesehen, daß im Freischalteprogramm geprüft wird, ob das Netzelement, in dem das Freischalteprogramm gestartet worden ist, von den aktuell freizuschaltenden Leistungsmerkmalen betroffen ist und daß, falls das Netzelement nicht betroffen ist, das Freischalteprogramm abgebrochen wird.

Um sicherzustellen, daß auch Netzelemente bezüglich freizuschaltender Leistungsmerkmale aktualisiert werden, die während der Eingabe eines Freischaltepaßworts nicht in Betrieb sind oder nicht erreichbar sind, ist in einer besonders günstigen Ausgestaltung der Erfindung vorgesehen, daß die Basisstationssteuereinheit oder das Betriebs- und Wartungszentrum, an der/dem eine Wartungseinrichtung zum Eingeben des Freischaltepaßworts angeschlossen ist, eine Datei mit einer Liste der Basisstationssteuereinheiten führt und aktualisiert, die ein neu eingegebenes Freischaltepaßwort noch nicht empfangen haben. Dieses Betriebs- und Wartungszentrum bzw. diese Basisstationssteuereinheit prüft, ob eine Basisstationssteuereinheit, die ein neues Freischaltepaßwort noch nicht empfangen hat, mittlerweile erreichbar ist, um das Freischaltepaßwort zuzustellen und die Datei zu aktualisieren.

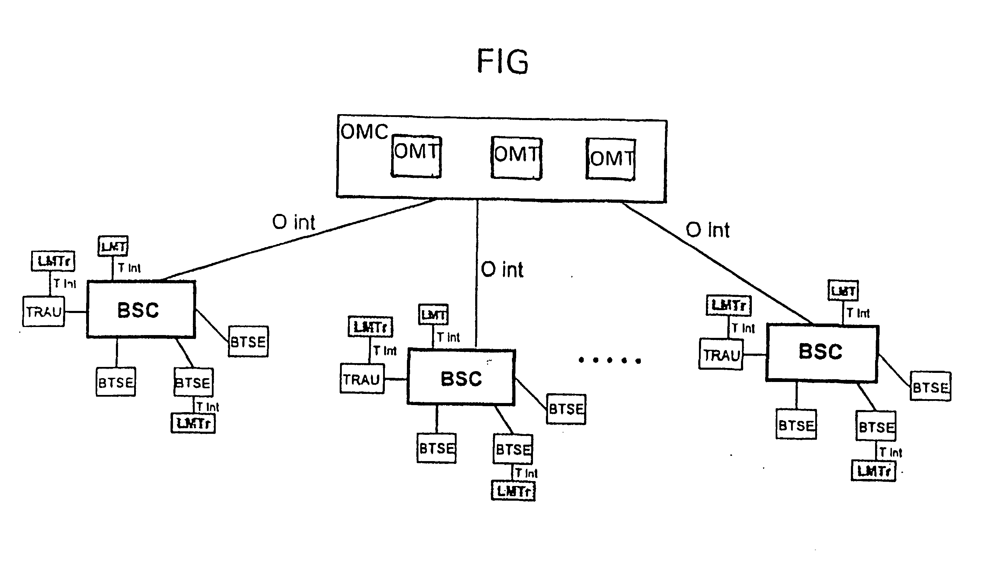

Nachstehend wird die Erfindung anhand eines Ausführungsbeispiels unter Bezugnahme auf die Figur näher erläutert.

Die Figur zeigt den für das Konfigurieren eines Basisstationssubsystems relevanten Teil eines Mobilfunksystems.

Die Figur zeigt als Teil eines Basisstationssubsystems drei Basisstationssteuerungen BSC, jeweils mit drei Funkbasisstationen BTSE und einer Transcodier- und Ratenanpaßeinheit TRAU. Im Bereich jeder der dargestellten Basisstationssteuereinheiten BSC ist beispielhaft eine Wartungseinrichtung LMT gezeigt, die über eine Schnittstelle Tint an die Basisstationssteuereinheit BSC angeschlossen ist. Außerdem ist jeweils eine Wartungseinrichtung LMTr gezeigt, die über eine Schnittstelle Tint mit der Transcodier- und Ratenanpaßeinheit TRAU gekoppelt ist sowie eine Wartungseinrichtung LMTr, die über eine Schnittstelle Tint an eine der Funkbasisstationen BTSE jeder Basisstationssteuereinheit BSC angeschlossen ist.

Das Bezugszeichen LMTr soll im Gegensatz zu dem Bezugszeichen LMT kenntlich machen, daß die entsprechende Wartungseinrichtung im Fernsteuermodus auf die Basisstationssteuereinheit BSC zugreift.

Die drei in der Figur dargestellten Basisstationssteuereinheiten BSC sind jeweils über eine O-Schnittstelle Oint mit einem Betriebs- und Wartungszentrum OMC gekoppelt, in dem mehrere, in der Figur drei, Betriebs- und Wartungseinrichtungen OMT vorhanden sind.

Das beschriebene Ausführungsbeispiel eines erfindungsgemäßen Verfahrens baut darauf auf, daß beim Softwarehersteller eines Basisstationssubsystems eine kundenunabhängige Liste aller optinal einrichtbaren Leistungsmerkmale vorliegt. Diese Liste kann beispielsweise aus maximal 256 möglichen Einträgen bestehen. Jedes Leistungsmerkmal hat innerhalb dieser Liste eine feste Position. Wird die Liste erweitert, so nehmen zusätzlich aufgenommene Leistungsmerkmale jeweils die folgenden unbesetzten Positionen ein. Dadurch kann eine 1 an einer bestimmten Stelle der Liste beispielsweise besagen, daß das Leistungsmerkmal, dem diese Stelle der Liste zugeordnet ist, freizuschalten ist. Eine 0 an der entsprechenden Stelle würde dann bedeuten, daß das Leistungsmerkmal blockiert ist.

Eine Betriebssoftware wird an einen Kunden grundsätzlich mit gesperrten optionalen Leistungsmerkmalen ausgeliefert. Ein Operator einer Wartungseinrichtung eines Kommunikationssystems, in das diese Betriebssoftware eingespielt worden ist, erhält somit an einer grafischen Benutzerschnittstelle eine Darstellung der Funktion als nicht aktivierbar. Bei Verwendung einer Kommandoeingabeschnittstelle werden die Kommandos, die gesperrte Leistungsmerkmale betreffen, unmittelbar an der Benutzerschnittstelle mit einer Fehlermeldung abgelehnt.

Mit dem Kauf einer Betriebssoftware oder nach dem Kauf zusätzlicher optionaler Leistungsmerkmale erhält ein Kunde ein verschlüsseltes Freischaltepaßwort, das auch als Identifizierungsinformation kundenspezifische Komponenten berücksichtigt. Für das GSM-Netz sind dies die nach dem GSM-Standard festgelegten Komponenten MCC und MNC, wobei MCC für den englischsprachigen Ausdruck 'Mobile Country Code' steht, einem Code, der drei Oktetten lang ist, und wobei MNC für 'Mobile Network Code' steht, einem Code, der zwei Oktetten lang ist.

Mit dem geannten Freischaltepaßwort wird eine Freischalteprozedur an der Bedienoberfläche einer Wartungseinrichtung gestartet. Diese Wartungseinrichtung OMT, LMT kann hierbei entweder zentral im Betriebs- und Wartungszentrum OMC angeschlossen sein oder vor Ort logisch an eine Basisstationssteuereinheit BSC angeschlossen sein. Wenn eine Freischalteprozedur gestartet wird, berücksichtigt diese das vollständige Mobilfunknetz. Da die Leistungsmerkmale üblicherweise mehrere Netzeinrichtungen betreffen können, muß eine Tabelle der aktivierbaren Leistungsmerkmale in jeder Netzeinrichtung BSC, BTSE, TRAU vorliegen. Demnach muß das Freischaltepaßwort zum Starten von Freischalteprogrammen an alle angeschlossenen Netzeinrichtungen des Basisstationssubsystems übertragen werden.

Jedem optionalen Leistungsmerkmal wird ein eindeutiges sinternes Attribut eines spezifischen gemanagten Objektes zugeordnet, wobei der Ausgangswert "blockiert" ist. Im Gegensatz zu anderen Attributen kann dieses interne Attribut weder durch ein Operatorkommando noch durch die Software verändert werden, sondern nur durch das Ausführen eines Freischalteprogramms mit dem entsprechenden Paßwort. Wird ein Freischalteprogramm mit dem entsprechenden Paßwort abgearbeitet, so kann der Wert eines solchen internen Attributes auf "freigegeben" gesetzt werden. Abhängig davon, ob ein zu änderndes gemanagtes Objekt ein funktionsbezogenes gemanagtes Objekt oder ein hardwarebezogenes gemanagtes Objekt ist, muß das Freischalteprogramm in der Basisstationssteuereinheit abgearbeitet werden, die als Master aller funktionsbezogenen gemanagten Objekte dient, oder wird in den jeweiligen hardwarebezogenen Netzeinrichtungen, also in einer Basisstationssteuereinheit BSC, einer Basisstation BTSE oder einer Transcodier- und Ratenanpaßeinheit TRAU abgearbeitet.

Die genannte Freischalteprozedur muß in jeder Netzeinrichtung eine operationale Schnittstelle zum Datenbankmanagement haben. Nachdem die Freischalteprozedur erfolgreich ausgeführt worden ist, sind die freigeschalteten Leistungsmerkmale entweder durch eine Bedienbperson an der Benutzerschnittstelle aktivierbar, oder automatisch durch das System, falls das Leistungsmerkmal nicht über Bedien- und Wartungsvorgänge steuerbar ist. Jedes Freischaltepaßwort bewirkt die Freischaltung einer speziellen Kombination, nämlich aller für einen Kunden freizuschaltenden Leistungsmerkmale. Auch bei nachträglichem Freischalten zusätzlicher Leistungsmerkmale bewirkt das hierzu ausgegebene Freischaltepaßwort das Freischalten aller kundenspezifischer Leistungsmerkmale. Dadurch wird eine netzweite Freischaltung aller Leistungsmerkmale auch bei Inbetriebnahme zusätzlich installierter Netzeinheiten im Mobilfunknetz gewährleistet.

Eine Basisstationssteuereinheit BSC leitet das von dem Bedien- und Wartungszentrum OMC oder von einer Wartungseinrichtung LMT empfangene Freischaltepaßwort an alle angeschlossenen Basisstationen BTSE und Transcodier- und Ratenanpaßeinrichtungen TRAU weiter. Ist eine Netzeinrichtung vom aktuellen freizuschaltenden Leistungsmerkmal nicht betroffen oder ist das Leistungsmerkmal unbekannt, beendet die entsprechende Netzeinrichtung das Freischalteprogramm sofort.

Wenn das Freischaltepaßwort von einem Bedien- und Wartungszentrum OMC aus an alle angeschlossenen Basisstationssteuereinheiten BSC verteilt wird, kann es sein, daß beim Start einer Freischalteprozedur nicht alle O-Schnittstellen zwischen dem Bedien- und Wartungszentrum OMC und den einzelnen Basisstationssteuereinheiten BSC zur Verfügung stehen oder daß einige Basisstationssteuereinheiten BSC nicht im Betrieb sind. Deshalb verwaltet das Bedien- und Wartungszentrum intern eine gegebenenfalls nach den Basisstationssteuereinheitennummern sortierten Tabelle, in der jedem freigeschalteten Leistungsmerkmal eine dynamisch sich ändernde Liste der Basisstationssteuereinheiten BSC zugeordnet ist, die das Freischalteprogramm noch nicht erfolgreich ausgeführt haben. Hierzu liefert jede Basisstationssteuereinheit BSC, sobald sie ein freizuschaltendes Leistungsmerkmal freigeschaltet hat, eine Bestätigung an das Bedien- und Wartungszentrum OMC. Sobald die Kommunikation mit einer Basisstationssteuereinheit BSC wieder aufgenommen werden kann, die ein freizuschaltendes Leistungsmerkmal noch nicht als freigeschaltet gemeldet hat, wird an diese Basisstationssteuereinheit BSC das Freischaltepaßwort gesendet.

So wie das Bedien- und Wartungszentrum OMC eine Liste aller eine Freischalteprozedur noch nicht ausgeführt habenden Basisstationssteuereinheiten BSC führt, führt jede Basisstationssteuereinheit BSC eine Tabelle der Basisstationen BTSE und der Transcodier- und Ratenanpaßeinrichtungen TRAU, die zusätzlich freizuschaltende Leistungsmerkmale noch nicht freigeschaltet haben. Sobald eine solche Netzeinrichtung BTSE, TRAU wieder über die Abis- oder die Asub-Schnittstelle erreichbar ist, wird das Freischaltepaßwort von der Basisstationssteuereinheit BSC erneut zugestellt.

Die beim Softwarehersteller unverknüpft vorliegenden Komponenten Betriebssoftware, Identifizierungsinformation, Geheiminformation und Leistungsmerkmalinformation werden in nachfolgend beschriebener Weise bearbeitet, bevor sie an einen Kunden ausgegeben werden:

Die Geheiminformation, auch S-string genannt, ist im Ausführungsbeispiel 64 Bit lang und wird in der Betriebssoftware, evtl. auf mehrere Teile aufgespaltet, an unterschiedlichen Stellen versteckt. Außerdem dient sie als Eingangsgröße eines Verschlüsselungsalgorithmus zum Erstellen des Freischaltepaßworts. Die Leistungsmerkmalinformation, auch T-string bezeichnet, ist im Ausführungsbeispiel 256 Bit lang, wobei jedem optionalen Leistungsmerkmal 1 Bit zugeordnet ist und eine 1 an der entsprechenden Stelle des T-string bedeutet, daß das zugeordnete Leistungsmerkmal freizuschalten ist. Diese Leistungsmerkmalinformation wird unverschlüsselt an den Kunden ausgegeben und dient außerdem als Eingangsgröße für den erwähnten Verschlüsselungsalgorithmus.

Eine Identifizierungsinformation, die dem Kunden bekannt ist und bereits infolge einer Erstinstallation in jedem Netzelement des Kommunikationssystems enthalten ist, dient ebenfalls als Eingangsgröße des genannten Verschlüsselungsalgorithmus. Mit den Eingangsgrößen des Verschlüsselungsalgorithmus wird zunächst die Hasch-Funktion MD5 (T.I.S) gebildet. Die ersten 64 Bits des verschlüsselten Ergebnisses werden dann als Freischaltepaßwort ausgewählt, das zusammen mit der Leistungsmerkmalinformation an den Kunden gegeben wird.

Das Freischalten optionaler Leistungsmerkmale im Mobilfunknetz erfolgt im beschriebenen Ausführungsbeispiel dann folgendermaßen:
Der Kunde erhält das Freischaltepaßwort und die Leistungsmerkmalinformation eingebettet in einem einfachen SETUP-Programm. Beim Start dieses Programms an einer Betriebs- und Wartungseinrichtung OMT oder einer Wartungseinrichtung LMT wird der Bediener aufgefordert, die ihm bekannte Identifizierungsinformation einzugeben. Die Bedien- und Wartungseinrichtung OMT oder die Wartungseinrichtung LMT gibt daraufhin ein Freigabekommando (RELEASE) mit dem Freischaltepaßwort, der Leistungsmerkmalinformation und der vom Betreiber eingegebenen Identifizierungsinformation als Parametern an alle Basisstationssteuereinheiten BSC, von denen aus das Kommando auch an die angeschlossenen Basisstationen BTSE und Transcodier- und Ratenanpaßeinrichtungen TRAU gesendet wird. In jeder Netzeinrichtung BSC, BTSE, TRAU werden die Parameter des Freigabekommandos gespeichert und das folgende Freischalteprogramm ausgeführt: Die vom Bediener eingegebene Identifizierungsinformation wird mit einer in der Netzeinrichtung bereits gespeicherten Identifizierungsinformation verglichen. Das Freischalteprogramm läuft nur bei festgestellter Übereinstimmung weiter. Die Identifizierungsinformation ist in diesem Fall aus den bereits oben erwähnten Komponenten MCC und MNC des Netzbetreibers zusammengesetzt.

Aus der Betriebssoftware wird die Geheiminformation extrahiert und aus der extrahierten Geheiminformation, der eingegebenen Identifizierungsinformation und der eingegebenen Leistungsmerkmalinformation wird die Hasch-Funktion MD5 (T.I.S) berechnet. Wenn die ersten 64 Bit des Rechenergebnisses mit dem vom Hersteller bereitgestellten Freischaltepaßwort übereinstimmen, wird die eingegebene Leistungsmerkmalinformation, also die Leistungsmerkmaltabelle, als authentisch akzeptiert und in der Netzeinrichtung gemeinsam mit einem Prüfsummenwert gespeichert. Die optionalen Leistungsmerkmale, die in der Leistungsmerkmalinformation einen Wert 1 haben, werden durch das Setzen entsprechender Attribute in der Netzeinrichtungsdatenbank freigeschaltet. Um eine Manipulation der Leistungsmerkmaltabelle zu vermeiden, wird bei jedem Start einer Netzeinrichtung die Unversehrtheit der Leistungsmerkmaltabelle durch Bilden eines neuen Prüfsummenwertes und durch Vergleichen dieses Prüfsummenwertes mit dem gespeicherten Prüfsummenwert festgestellt. Außerdem wird die Hasch-Funktion neu berechnet und das Ergebnis mit dem Freischaltepaßwort verglichen. Bei fehlerhaftem Überprüfungsergebnis wird ein Starten der Netzeinrichtung verhindert.

Das beschriebene Verfahren ist von Betriebssystemen einzelner Netzeinrichtungen unabhängig.

## Patentansprüche

1. Verfahren zum Freischalten von verfügbaren Leistungsmerkmalen eines Kommunikationssystems, in dem die zur Realisierung der verfügbaren Leistungsmerkmale erforderliche Betriebssoftware geladen ist, mit den folgenden Verfahrensschritten:
Starten eines Freischalteprogramms mit einem eingegebenen Freischaltepaßwort, das unter Verwendung einer dem Betreiber des Kommunikationssystems bekannten Identifizierungsinformation, einer dem Betreiber nicht zur Verfügung gestellten, in der Betriebssoftware des Kommunikationssystems versteckt enthaltenen Geheiminformation und einer alle freizuschaltenden Leistungsmerkmale kennzeichnenden Leistungsmerkmalinformation gebildet ist, in diesem Freischalteprogramm Ermitteln eines Freischaltepaßworts im Kommunikationssystem unter Verwendung der in der Betriebssoftware des Kommunikationssystems versteckt enthaltenen Geheiminformation, einer vom Betreiber einzugebenden Identifizierungsinformation und einer einzugebenden, alle freizuschaltenden Leistungsmerkmale kennzeichnenden Leistungsmerkmalinformation und Freischalten der durch diese Leistungsmerkmalinformation als freizuschaltend festgelegten Leistungsmerkmale, falls das ermittelte Freischaltepaßwort und das eingegebene Freischaltepaßwort übereinstimmen.

2. Verfahren nach Anspruch 1, **dadurch gekennzeichnet, daß** das Freischaltepaßwort durch Bilden der Hash-Funktion MD5 und Auswählen einer bestimmten Anzahl von Bit des Hash-Ergebnisses festgelegt wird.

3. Verfahren nach Anspruch 1 oder 2, **dadurch gekennzeichnet, daß** die eingegebene Identifizierungsinformation, die eingegebene Leistungsmerkmalinformation und das eingegebene Freischaltepaßwort von einer Einrichtung, an der das Freischalteprogramm gestartet wird, zu allen vom Ändern des Leistungsmerkmalstatus betroffenen Netzelementen übermittelt werden, und daß in jedem Netzelement mit Hilfe dieser Informationen und der Geheiminformation ein Freischaltepaßwort ermittelt und mit dem übermittelten Freischaltepaßwort verglichen wird.

4. Verfahren nach Anspruch 3, **dadurch gekennzeichnet, daß** vor dem Bilden eines Freischaltepaßwortes in jedem Netzelement die übermittelte Identifizierungsinformation mit einer bei der Erstinstallation eingegebenen Identifizierungsinformation verglichen wird und das Freischalteprogramm bei fehlender Übereinstimmung in dem jeweiligen Netzelement abgebrochen wird.

5. Verfahren nach Anspruch 3 oder 4, **dadurch gekennzeichnet, daß** bei Übereinstimmung des ermittelten und des übermittelten Freischaltepaßwortes die freizuschaltenden Leistungsmerkmale freigeschaltet werden und die Leistungsmerkmalinformation mit einer eigenen Prüfsumme im Netzelement gespeichert wird.

6. Verfahren nach einem der vorhergehenden Ansprüche zum Freischalten von verfügbaren Leistungsmerkmalen des Basisstationssubsystems eines Mobilfunknetzes, **dadurch gekennzeichnet, daß** das Freischaltepaßwort an alle Netzelemente, also an alle Basisstationen (BTSE), an alle Transcodier- und Ratenanpaßeinheiten (TRAU) und an alle Basisstationssteuereinheiten (BSC) weitergeleitet wird und in jedem dieser Netzelemente ein Freischalteprogramm gestartet wird.

7. Verfahren nach Anspruch 6, **dadurch gekennzeichnet, daß** im Freischalteprogramm geprüft wird, ob das Netzelement (BTSE, TRAU, BSC), in dem das Freischalteprogramm gestartet worden ist, von den aktuell freizuschaltenden Leistungsmerkmalen betroffen ist und daß, falls das Netzelement nicht betroffen ist, das Freischalteprogramm abgebrochen wird.

8. Verfahren nach Anspruch 6 oder 7, **dadurch gekennzeichnet, daß** die Basisstationssteuereinheit (BSC) oder das Betriebs- und Wartungszentrum (OMC), an der/dem eine Wartungseinrichtung (OMT, LMT) zum Eingeben des Freischaltepaßworts angeschlossen ist, eine Datei mit einer Liste der Basisstationssteuereinheiten (BSC) führt und aktualisiert, die ein neu eingegebenes Freischaltepaßwort noch nicht empfangen haben, und daß dieses Betriebs- und Wartungszentrum (OMC) bzw. diese Basisstationssteuereinheit (BSC) prüft, ob eine Basisstationssteuereinheit (BSC), die ein neues Freischaltepaßwort noch nicht empfangen hat, mittlerweile erreichbar ist, um das Freischaltepaßwort zuzustellen und die Datei zu aktualisieren.

## Claims

1. Method for releasing available service features of a communication system, in which the operating software required to provide the available service features is loaded, with the following method steps:
Start-up of a release programme with an input release password, which is created using identification information known to the operator of the communication system, confidential information not supplied to the operator and concealed in the operating software of the communication system and service feature information identifying all the service features to be released, determination in this release programme of a release password in the communication system using the confidential information concealed in the operating software of the communication system, identification information to be input by the operator and service feature information to be input identifying all the service features to be released and release of the service features defined by this service feature information as to be released, if the determined release password and the input release password correspond.

2. Method according to Claim 1, **characterised in that** the release password is defined by creating the hash function MD5 and selecting a specific number of bits of the hash result.

3. Method according to Claim 1 or 2, **characterised in that** the input identification information, the input service feature information and the input release password are transmitted by a terminal, at which the release programme is started, to all network elements affected by the change in service feature status, and that this information and the confidential information is used in every network element to determine a release password, which is compared with the transmitted release password.

4. Method according to Claim 3, **characterised in that** before a release password is created in every network element the transmitted identification information is compared with identification information input during initial installation and if there is no correspondence the release programme is terminated in the respective network element.

5. Method according to Claim 3 or 4, **characterised in that** if the determined password and the transmitted password correspond, the service features to be released are released and the service feature information is stored with its own specific checksum in the network element.

6. Method according to one of the preceding claims for releasing available service features of the base station subsystem of a mobile radio network, **characterised in that** the release password is forwarded to all the network elements, i.e. all base stations (BTSE), all transcoder and rate adapter units (TRAU) and all base station controllers (BSC) and a release programme is started in each of these network elements.

7. Method according to Claim 6, **characterised in that** it is verified in the release programme whether the network element (BTSE, TRAU, BSC) in which the release programme was started, is affected by the service features to be released in each instance and if the network element is not affected, the release programme is terminated.

8. Method according to Claim 6 or 7, **characterised in that** the base station controller (BSC) or the operation and maintenance centre (OMC), to which a maintenance terminal (OMT, LMT) is connected for inputting the release password, keeps and updates a file containing a list of base station controllers (BSC), which have not yet received a newly input release password, and this operation and maintenance centre (OMC) or this base station controller (BSC) verifies whether a base station controller (BSC), which has not yet received a new release password, has become available in the meantime, to deliver the release password and update the file.

## Revendications

1. Procédé pour l'activation de services disponibles d'un système de communication, dans lequel le logiciel d'exploitation nécessaire pour la réalisation des services disponibles est chargé, comprenant les étapes de procédé suivantes :
démarrage d'un programme d'activation avec un mot de passe d'activation entré, qui est formé en utilisant une information d'identification connue de l'exploitant du système de communication, une information confidentielle qui n'est pas mise à la disposition de l'exploitant et est incluse de façon dissimulée dans le logiciel d'exploitation du système de communication et une information de service disponible qui **caractérise** tous les services disponibles à activer, dans ce programme d'activation détermination d'un mot de passe d'activation dans le système de communication avec l'utilisation de l'information confidentielle incluse de façon dissimulée dans le logiciel d'exploitation du système de communication, d'une information d'identification à entrer par l'exploitant et d'une information de service disponible à entrer et caractérisant tous les services disponibles à activer et activation des services disponibles définis par cette information comme étant activée, lorsque le mot de passe d'activation déterminé et le mot de passe d'activation entré coïncident.

2. Procédé selon la revendication 1, **caractérisé en ce que** le mot de passe d'activation est défini par la formation de la fonction de hachage MD5 et par le choix d'un nombre défini de bits du résultat de hachage.

3. Procédé selon la revendication 1 ou 2, **caractérisé en ce que** l'information d'identification entrée, l'information de service disponible entrée et le mot de passe d'activation entré sont transmis par un dispositif, sur lequel le programme d'activation est lancé, à tous les éléments de réseau concernés par la modification de l'état de service disponible, et **en ce qu'**un mot de passe d'activation est déterminé dans chaque élément de réseau à l'aide de ces informations et de l'information confidentielle et est comparé avec le mot de passe d'activation transmis.

4. Procédé selon la revendication 3, **caractérisé en ce que**, avant la formation d'un mot de passe d'activation dans chaque élément de réseau, l'information d'identification transmise est comparée avec une information d'identification entrée lors de la première installation et le programme d'activation est interrompu en cas d'absence de concordance dans l'élément de réseau concerné.

5. Procédé selon la revendication 3 ou 4, **caractérisé en ce que**, en cas de concordance du mot de passe d'activation déterminé et du mot de passe d'activation transmis, les services disponibles sont activés et l'information de service disponible est mémorisée avec une somme d'essai propre dans l'élément de réseau.

6. Procédé selon l'une quelconque des revendications précédentes pour l'activation de services disponibles du sous-système de station de base d'un réseau de téléphonie mobile, **caractérisé en ce que** le mot de passe d'activation est transmis à tous les éléments de réseau, donc à toutes les stations de base (BTSE), à toutes les unités de transcodage et d'adaptation de débit (TRAU) et à toutes les unités de commande de station de base (BSC) et un programme d'activation est lancé dans chacun de ces éléments de réseau.

7. Procédé selon la revendication 6, **caractérisé en ce qu'**on vérifie dans le programme d'activation si l'élément de réseau (BTSE, TRAU, BSC), dans lequel le programme d'activation a été démarré, est concerné par les services disponibles à activer actuellement et que, si l'élément de réseau n'est pas concerné, le programme d'activation est interrompu.

8. Procédé selon la revendication 6 ou 7, **caractérisé en ce que** l'unité de commande de station de base (BSC) ou le centre d'exploitation et de maintenance (OMC), à laquelle/auquel un dispositif de maintenance (OMT, LMT) est raccordé pour entrer le mot de passe d'activation, gère et met à jour un fichier avec une liste des unités de commande de station de base (BSC) qui n'ont pas encore reçu un mot de passe d'activation nouvellement entré et **en ce que** ce centre d'exploitation et de maintenance (OMC) resp. cette unité de commande de station de base (BSC) vérifie si une unité de commande de station de base (BSC), qui n'a pas encore reçu un nouveau mot de passe d'activation, peut être jointe entre-temps pour adresser le mot de passe d'activation et actualiser le fichier.
